# NEUE EUROPÄISCHE PATENTSCHRIFT

(11) **EP 0 768 220 B2**
(45) Veröffentlichungstag und Bekanntmachung des Hinweises auf die Entscheidung über den Einspruch: **19.12.2001**
(45) Hinweis auf die Patenterteilung: 21.07.1999
(21) Anmeldenummer: 96116039.7
(22) Anmeldetag: 07.10.1996
(51) Int. Cl.: B60R 25/02

(54) **Lenkschloss für Kraftfahrzeuge**
Steering lock for a motor vehicle
Verrou de direction pour véhicule à moteur

(30) Priorität: 09.10.1995 DE 19537476
(43) Veröffentlichungstag der Anmeldung: 16.04.1997
(73) Patentinhaber: Valeo Deutschland GmbH & Co. Sicherheitssysteme, 85253 Erdweg (DE)
(72) Erfinder: Themel, Friedwald, 86561 Aresing (DE); Lehmeier, Norbert, 85051 Ingolstadt (DE); Schachtl, Stephan, 80331 München (DE)
(74) Vertreter: Croonenbroek, Thomas

(56) Entgegenhaltungen:
- DE-A- 4 016 779
- DE-A- 4 307 339

## Beschreibung

Die Erfindung betrifft ein Lenkschloß für Kraftfahrzeuge mit einem in einem Schließzylinder drehbar und axial verschieblich gelagerten Zylinderkern, in dessen axialem Schlüsselkanal ein Schlüssel einsteckbar ist, der bei richtigem Schlüssel Zuhaltungen des Zylinderkerns in eine Stellung bringt, in der der Zylinderkern gegenüber dem Schließzylinder verdrehbar ist und eine Steuerwelle mitnimmt, die mit einem Steuernocken die Funktion der Lenkwelle unterbricht, wobei die Steuerwelle von dem Zylinderkern abkoppelbar ist, wenn durch einen falschen Schlüssel oder durch Gewaltanwendung der Zylinderkern mit dem Schließzylinder verdreht wird, und wobei am Zylinderkern ein axiales Steuerteil angekoppelt ist, das durch den Zylinderkern verdrehbar ist.

Aus der DE 40 16 779 ist ein solches Lenkschloß bekannt. Die zwischen dem Schließzylinder und der Steuerwelle angeordneten Teile erhöhen die axiale Länge des Lenkschlosses. Ferner muß bei Betätigung des Schlosses durch den Schlüssel ein verhältnismäßig hohes Drehmoment aufgewendet werden.

Aufgabe der Erfindung ist es, ein Lenkschloß der eingangs genannten Art so zu verbessern, daß bei geringer Baulänge eine leichtgängige Betätigung des Schlosses durch den Schlüssel möglich ist.

Diese Aufgabe wird erfindungsgemäß durch die Merkmale des Anspruchs 1 gelöst.

Das Steuerteil, der Mitnehmer und der drehfeste Ring bilden eine kompakte Baueinheit geringer axialer Länge, da der Mitnehmer und der drehfeste Ring das Steuerteil in axialer Richtung zu beiden Seiten nicht überragen. Ferner entfällt die Relativbewegung von Steuerteil zum Mitnehmer und vom Mitnehmer zur Steuerwelle, so daß das Betätigungsmoment am Schlüssel verringert ist.

Das erfindungsgemäße Lenkschloß ist von besonders einfacher Konstruktion, hoher Funktionstüchtigkeit und weist nur wenige Teile auf.

Besonders vorteilhaft ist hierbei, daß der Mitnehmer und der drehfeste Ring innerhalb der axialen Länge des Steuerteils liegen und diesen umgeben, wobei die Teile ein Paket mit geringer axialer Länge bilden.

Vorzugsweise wird vorgeschlagen, daß der Schließzylinder an seiner inneren Stirnseite Schrägflächen aufweist, mit denen der drehfeste Ring axial verschiebbar ist. Auch ist von Vorteil, daß auf der Außenseite des Steuerteils der ringförmige Mitnehmer und auf der Außenseite des ringförmigen Mitnehmers der drehfeste Ring gelagert ist.

Besonders vorteilhaft ist es, wenn an der inneren Stirnseite des Schließzylinders mindestens eine weitere Schrägfläche ist, auf der eine Kante oder Schrägfläche des Steuerteils entlangläuft, wenn das Steuerteil verdreht wird, um das Steuerteil, den Mitnehmer und die Steuerwelle axial zu verschieben.

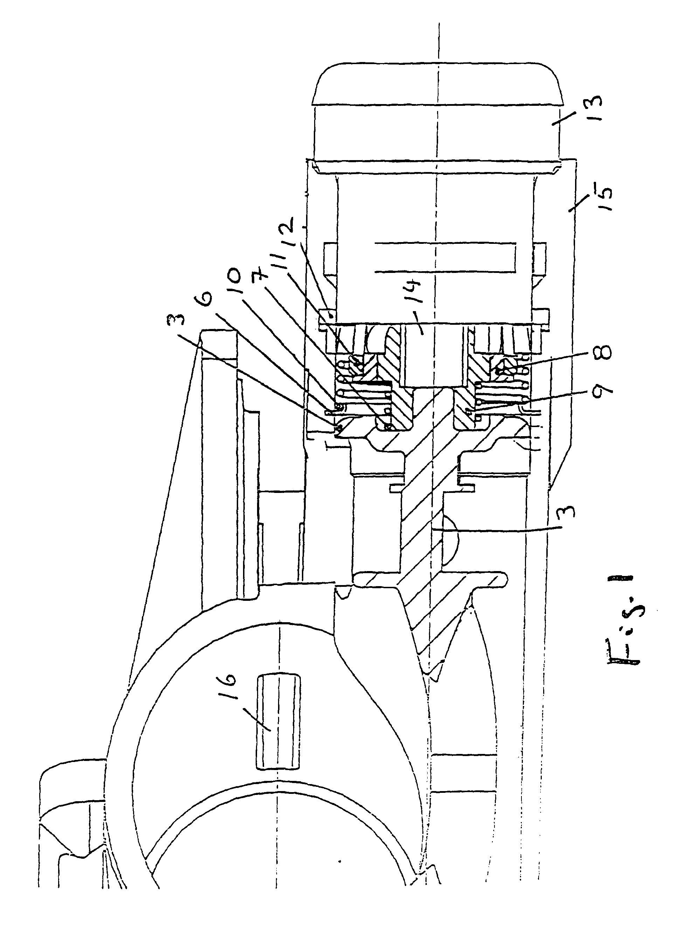

Ein Ausführungsbeispiel der Erfindung ist in Zeichnungen dargestellt und wird im folgenden näher beschrieben. Es zeigen
- Fig. 1: einen axialen Schnitt durch das Lenkschloß bei abgezogenem Schlüssel und

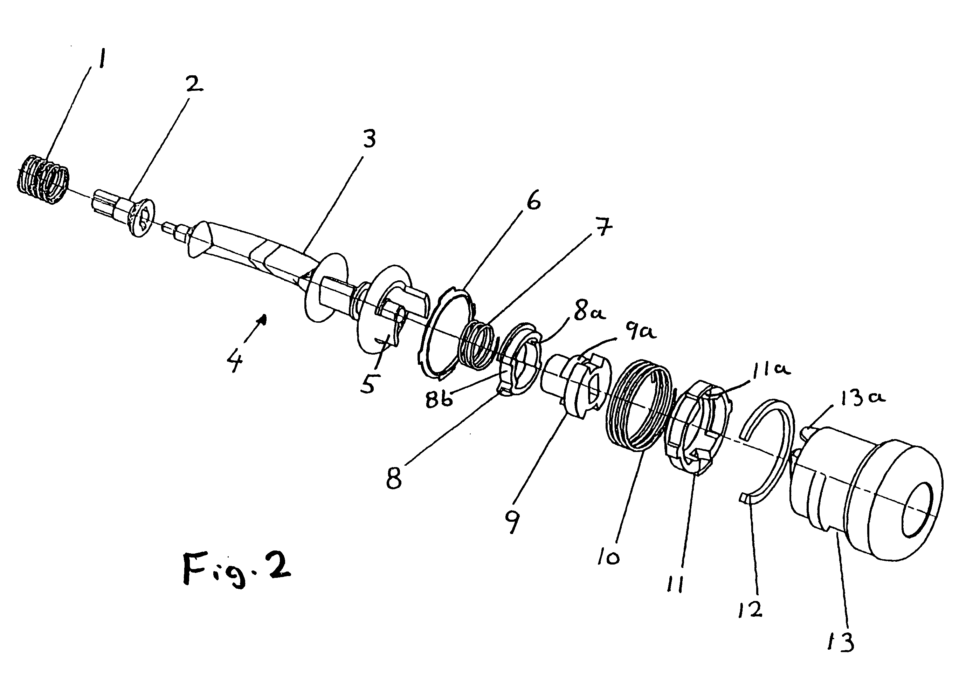

- Fig. 2: die Innenteile des Lenkschlosses nebeneinander angeordnet.

In einer Ausnehmung eines Lenkschloßgehäuses 15 liegt ein Schließzylinder 13 ein, in dem koaxial ein Zylinderkern 14 drehbar gelagert ist. Das innere Ende des Zylinderkerns ist mit einer koaxialen Steuerwelle 4 verbunden, deren inneres Ende über eine Zwischenwelle 2 einen nicht dargestellten Drehschalter betätigt. Die Steuerwelle 4 weist einen Steuernocken 3 auf, der insbesondere über Zwischenteile einen Sperrbolzen 16 bewegt, durch den die Lenkung eines Kraftfahrzeuges blockierbar ist.

Wird ein passender Schlüssel in den Schlüsselkanal des Zylinderkerns eingesteckt und der Zylinderkern durch den Schlüssel verdreht, so werden durch Schrägflächen die inneren Teile des Schlosses, insbesondere die Steuerwelle 4 axial gegen den Druck der Feder 1 verschoben. Diese verschobene Stellung wird auch dann beigehalten, wenn der Schlüssel wieder in die Ausgangsstellung zurückgedreht wird. Erst ein Abziehen des Schlüssels führt zu einer Rückstellung der Steuerwelle und damit zu einem Einschnappen des Sperrbolzens.

Das innere Ende des Zylinderkerns 14 ragt in ein etwa walzenförmiges Steuerteil 9 formschlüssig hinein, so daß das Steuerteil 9 durch den Zylinderkern 14 verdrehbar ist. Auf dem Steuerteil 9 ist ein ringförmiger Mitnehmer 8 axial verschieblich gelagert, der zwei radiale innere Ausnehmungen 8a aufweist, in denen jeweils ein Nocken 9a auf der Außenseite des Steuerteils 9 einliegt. Die Nocken 9a sind nur im mittleren Bereich des Steuerteils angeordnet, so daß sie nur dann in den Mitnehmer hineinreichen, wenn der Mitnehmer sich im mittleren Bereich des Steuerteils 9 befindet. Wird dagegen der Mitnehmer 8 auf dem Steuerteil 9 in eine Stellung verschoben, die weiter nach innen, d.h. näher zur Steuerwelle 4 liegt, so ist der Mitnehmer 8 nicht mehr am Steuerteil 9 angekuppelt, so daß das Steuerteil 9 sich verdrehen kann, ohne den Mitnehmer 8 mitzunehmen. Da in äußeren Ausnehmungen 8b des Mitnehmers 8 achsparallele Finger 5 der Steuerwelle 4 hineinragen und damit der Mitnehmer 8 die Steuerwelle 4 mitnimmt, führt ein Auskuppeln des Mitnehmers 8 dazu, daß das Steuerteil 9 die Steuerwelle 4 nicht mehr verdrehen kann.

Eine axiale Bewegung des Mitnehmers 8 geschieht durch einen Ring 11, der über dem Mitnehmer 8 und damit auch über dem Steuerteil 9 außen gelagert ist und drehfest angeordnet ist. Dieser axial verschiebliche Ring 11 weist innere Ausnehmungen 11a auf, in die Nocken 13a hineinreichen, die an der inneren Stirnseite des Schließzylinders 13 angeformt sind. In der Normalstellung des Schließzylinders 13 ragen die Nocken 13a in die Ausnehmungen 11 a hinein. Wird dagegen der Schließzylinder 13 durch einen falschen Schlüssel oder durch eine andere Gewaltanwendung gewaltsam aus seiner Normallage verdreht, so sorgen Schrägflächen zwischen den Ausnehmungen 11a und den Nocken 13 dafür, daß der drehfeste Ring 11 von dem Schließzylinder 13 axial weggedrückt wird, gegen den Druck der Feder 10. Hierbei nimmt der Ring 11 den am Ring 11 anliegenden Mitnehmerring 8 in axialer Richtung nach innen mit, so daß der Mitnehmer 8 vom Steuerteil 9 abgekuppelt wird, gegen den Druck der Feder 7. Damit ist sichergestellt, daß ein gewaltsames Verdrehen des Schließzylinders 13 aus seiner Normallage nicht zu einem Verdrehen der Steuerwelle 4 führen kann.

Nicht dargestellt ist, daß der Schließzylinder 13 im Lenkschloßgehäuse 15 durch ein Rastgesperre gehalten ist, das dafür sorgt, daß der Schließzylinder 13 in seiner normalen Drehlage verbleibt, wenn ein passender Schlüssel in den Zylinderkern gesteckt wird und durch diesen das Schloß betätigt wird. Erst bei nicht passendem Schlüssel wird das vom Zylinderkern auf den Schließzylinder aufgewandte Drehmoment bei hoher Kraftanwendung dafür sorgen, daß der rastende Halt des Schließzylinders 13 überwunden wird, ohne Schloßteile zu zerstören.

Steuerteil 9, Mitnehmer 8 und der drehfeste Kuppelring 11 bilden zusammen eine Baueinheit geringer axialer Länge, wobei die Teile 8 und 11 das Teil 9 in axialer Richtung zu keiner Seite überragen, so daß die axiale Länge dieser Baueinheit allein durch die Länge des Steuerteils 9 bestimmt ist. Hierbei wird das Steuerteil 9 noch von Vorsprüngen des Zylinderkerns 14 und der Steuerwelle 4 innen durchdrungen, so daß seine axiale Länge optimal genutzt ist.

Am inneren Ende des Schließzylinders 13 liegt im Inneren der Ausnehmung des Lenkschloßgehäuses 15 ein Sprengring 12 ein, der dafür sorgt, daß die im Inneren vormontierten Teile nicht nach außen fallen, wenn der Schließzylinder 13 noch nicht eingesteckt ist.

Auf das innere Ende der Steuerwelle 4 ist eine abziehbare Zwischenwelle 2 gesteckt, die die Drehungen der Steuerwelle 4 auf den nicht dargestellten Drehschalter überträgt. Wird durch einen Unbefugten versucht, nach Abbau des Drehschalters die Steuerwelle 4 zu erreichen, so kann er nur die Zwischenwelle 2 entfernen, ohne an die Steuerwelle 4 zu gelangen.

## Patentansprüche

1. Lenkschloß für Kraftfahrzeuge mit einem in einem Schließzylinder (13) drehbar und axial verschieblich gelagerten Zylinderkern (14), in dessen axialem Schlüsselkanal ein Schlüssel einsteckbar ist, der bei richtigem Schlüssel Zuhaltungen des Zylinderkerns (14) in eine Stellung bringt, in der der Zylinderkern gegenüber dem Schließzylinder (13) verdrehbar ist und eine Steuerwelle (4) mitnimmt, die mit einem Steuernocken (3) die Funktion der Lenkwelle unterbricht, wobei die Steuerwelle (4) von dem Zylinderkern (14) abkoppelbar ist, wenn durch einen falschen Schlüssel oder durch Gewaltanwendung der Zylinderkern mit dem Schließzylinder verdreht wird, und wobei am Zylinderkern (14) ein axiales Steuerteil (9) angekoppelt ist, das durch den Zylinderkern (14) verdrehbar ist,
**dadurch gekennzeichnet,**
- **daß** auf dem Steuerteil (9) ein ringförmiger Mitnehmer (8) axial verschieblich gelagert ist, der einerseits radiale innere Ausnehmungen (8a) aufweist in denen jeweils ein im mittleren Bereich auf der Außenseite des Steuerteils (9) angeordneter Nocken (9a) einliegt, so daß der Mitnehmer in einer dem Schließzylinder näheren Lage am Steuerteil angekuppelt ist und andererseits äußere Ausnehmungen (8b) aufweist, in die achsparallele Finger (5) der Steuerwelle (4) hineinragen und - daß zwischen Schließzylinder (13) und Mitnehmer (8) ein drehfester Ring (11) gelagert ist, der durch ein Verdrehen des Schließzylinders von diesem axial weg drückbar ist und hierdurch den Mitnehmer (8) in die ausgekuppelte Lage axial bewegt, in der er vom Steuerteil (9) abgekuppelt ist.

2. Lenkschloß nach Anspruch 1,
**dadurch gekennzeichnet, daß** der Mitnehmer (8) und der drehfeste Ring (11) innerhalb der axialen Länge des Steuerteils (9) liegen und diesen umgeben.

3. Lenkschloß nach Anspruch 1 oder 2,
**dadurch gekennzeichnet, daß** der Schließzylinder (13) an seiner inneren Stirnseite Schrägflächen (13a) aufweist, mit denen der drehfeste Ring (11) axial verschiebbar ist.

4. Lenkschloß nach einem der vorherigen Ansprüche,
**dadurch gekennzeichnet, daß** auf der Außenseite des Steuerteils (9) der ringförmige Mitnehmer (8) und auf der Außenseite des ringförmigen Mitnehmers der drehfeste Ring (11) gelagert ist.

5. Lenkschloß nach einem der vorherigen Ansprüche,
**dadurch gekennzeichnet, daß** an der inneren Stirnseite des Schließzylinders mindestens eine weitere Schrägfläche ist, auf der eine Kante oder Schrägfläche des Steuerteils (9) entlangläuft, wenn das Steuerteil (9) verdreht wird, um das Steuerteil (9), den Mitnehmer (8) und die Steuerwelle axial zu verschieben.

6. Lenkschloß nach einem der vorherigen Ansprüche,
**dadurch gekennzeichnet, daß** die Steuerwelle (4) über eine Zwischenwelle (2) den Lenkschloßschalter betätigt, wobei die Zwischenwelle an der Steuerwelle (4) lösbar befestigt ist.

## Claims

1. A steering lock for motor vehicles having a cylinder core (14), which is mounted rotatably and axially displaceably in a closing cylinder (13), and in the axial key channel of which a key can be inserted, which, with the correct key, brings tumblers of the cylinder core (14) into a position in which the cylinder core is rotatable in relation to the closing cylinder (13) and entrains a camshaft (4), which with a control cam (3) interrupts the function of the steering shaft, wherein the camshaft (4) can be uncoupled from the cylinder core (14) if the cylinder core with the closing cylinder is twisted by an incorrect key or by the application of force, and wherein an axial control part (9), which is rotated by the cylinder core (14), is coupled to the cylinder core (14),
**characterised in that**
- mounted with axial displacement on the control part (9) is a catch (8), which is annular and which on the one hand presents internal radial recesses (8a) in which enters respectively a toe (9a) disposed on the external face of the control element in order that the catch (8) is coupled on the camshaft (4) in a proximal position with respect to the closing cylinder, and on the other had presents recesses (8b) in which protrude finger (5) of the camshaft that are parallel to the axis,
**and in that**
- mounted between the closing cylinder (13) and catch (8) is a rotation-proof ring (11), which, by a twisting of the closing cylinder, can be forced axially away therefrom and thereby axially moves the catch (8) into the disengaged position in which it is uncoupled from the control part (9).

2. A steering lock according to Claim 1,
**characterised in that** the catch (8) and the rotation-proof ring (11) lie inside the axial length of the control part (9) and surround it.

3. A steering lock according to Claim 1 or 2,
**characterised in that** on its inner face the closing cylinder (13) has inclined faces (13a), with which the rotation-proof ring (11) is axially displaceable.

4. A steering lock according to one of the preceding Claims,
**characterised in that** the annular catch (8) is mounted on the outside of the control part (9) and the rotation-proof ring (11) is mounted on the outside of the annular catch.

5. A steering lock according to one of the preceding Claims,
**characterised in that** on the inner face of the closing cylinder there is at least one further inclined surface along which one edge or inclined surface of the control part (9) runs when the control part (9) is twisted, in order to axially displace the control part (9), the catch (8) and the camshaft.

6. A steering lock according to one of the preceding Claims,
**characterised in that** the camshaft (4) actuates the steering lock switch via an intermediate shaft (2), with the intermediate shaft being detachably fixed to the camshaft (4).

## Revendications

1. Serrure de blocage de direction pour véhicules automobiles, comportant un noyau de cylindre (14) monté tournant et mobile axialement dans un cylindre de fermeture (13) et dans le canal de clé axial duquel peut être introduite une clé qui, si elle est bonne, met des gâchettes du noyau de cylindre (14) dans une position dans laquelle le noyau de cylindre peut être tourné par rapport au cylindre de fermeture (13) et entraîne un arbre de commande (4) qui coupe par une came de commande (3) la fonction de l'arbre de direction, l'arbre de commande (4) pouvant être désaccouplé du noyau de cylindre (14) lorsqu'on tourne le noyau de cylindre avec le cylindre de fermeture au moyen d'une fausse clé ou en employant la force, et au noyau de cylindre (14) étant accouplé un élément de commande axial (9) qui permet de faire tourner le noyau de cylindre (14), **caractérisée par le fait que** sur l'élément de commande (9) est monté mobile axialement un entraîneur annulaire (8) qui présente d'une part des évidements internes radiaux (8a) dans lesquels pénètre respectivement un ergot (9a) qui est disposé sur la face externe de l'élément de commande de sorte que l'entraîneur (8) est couplé à l'élément de commande à une position proximale par rapport au cylindrique de fermeture, et d'autre part des évidements (8b) dans lesquels font saillie des doigts (5) de l'arbre de commande, parallèles à l'axe, et en ce qu'entre le cylindre de fermeture (13) et l'entraîneur (8) est monté un anneau calé en rotation (11) qui peut, par une rotation du cylindre de fermeture, être repoussé axialement de celui-ci et par là déplace axialement l'entraîneur (8) pour le mettre dans la position désaccouplée dans laquelle il est désaccouplé de l'élément de commande (9).

2. Serrure de blocage de direction selon la revendication 1, **caractérisée par le fait que** l'entraîneur (8) et l'anneau calé en rotation (11) sont placés à l'intérieur de la longueur axiale de l'élément de commande (9) et entourent celui-ci.

3. Serrure de blocage de direction selon l'une des revendications 1 et 2, **caractérisée par le fait que** le cylindre de fermeture (13) présente sur sa face frontale intérieure des surfaces inclinées (13a) qui permettent de déplacer axialement l'anneau calé en rotation (11).

4. Serrure de blocage de direction selon l'une des revendications précédentes, **caractérisée par le fait que** l'entraîneur annulaire (8) est monté sur le côté extérieur de l'élément de commande (9) et l'anneau calé en rotation (11) est monté sur le côté extérieur de l'entraîneur annulaire.

5. Serrure de blocage de direction selon l'une des revendications précédentes, **caractérisée par le fait que** sur la face frontale intérieure du cylindre de fermeture est prévue au moins une autre surface inclinée le long de laquelle un bord ou une surface inclinée de l'élément de commande (9) glisse lorsque l'élément de commande (9) est soumis à rotation afin de déplacer axialement l'élément de commande (9), l'entraîneur (8) et l'arbre de commande.

6. Serrure de blocage de direction selon l'une des revendications précédentes, **caractérisée par le fait que** l'arbre de commande (4) actionne le commutateur de serrure de blocage de direction par l'intermédiaire d'un arbre intermédiaire (2) qui est fixé de manière amovible à l'arbre de commande (4).
